# EUROPÄISCHE PATENTSCHRIFT

(11) **EP 1 667 338 B1**
(45) Veröffentlichungstag und Bekanntmachung des Hinweises auf die Patenterteilung: **19.09.2007**
(21) Anmeldenummer: 04106252.2
(22) Anmeldetag: 02.12.2004
(51) Int. Cl.: H04B 3/54, H04Q 7/30, H04Q 9/00

(54) **Zellulares Mobilfunknetz und Verfahren zum Errichten einer Basisstation eines zellularen Mobilfunknetzes in einer über ein Stromnetz gespeisten Einrichtung**
Cellular mobile network and method for incorporating a base station of a cellular mobile network in a facility being fed by a power supply system
Réseau cellulaire mobile et procédé pour réaliser une station de base d'un réseau cellulaire mobile dans une installation alimentée par un réseau de distribution d'énergie

(43) Veröffentlichungstag der Anmeldung: 07.06.2006
(73) Patentinhaber: Swisscom Mobile AG, 3050 Bern (CH)
(72) Erfinder: Lauper, Eric, 3014, Bern (CH)
(74) Vertreter: BOVARD AG

(56) Entgegenhaltungen:
- EP-A- 0 840 464
- WO-A-02/09462
- DE-A1- 4 421 307
- US-A- 6 151 480

## Beschreibung

Die vorliegende Erfindung betrifft ein zelluläres Mobilfunknetz und Verfahren zum Errichten einer Basisstation eines zellulären Mobilfunknetzes mit mindestens einer Basisstation, die in jeweils eine über ein Stromnetz gespiesene Einrichtung eingebaut ist und mit einem zugeordneten Base Station Controller verbunden ist, wobei die mindestens eine Basisstation mit einem ersten Transceivermodul an das Stromnetz gekoppelt ist, ein zweites Transceivermodul an anderer Stelle ebenfalls an das Stromnetz gekoppelt ist, wodurch das Übertragen von den Radiofrequenzsignalen entsprechenden, elektrischen Signalen bidirektional zwischen den Transceivermodulen mittels der Transceivermodule über das Stromnetz ermöglicht wird, und das zweite Transceivermodul mit dem der mindestens einen Basisstation zugeordneten Base Station Controller verbunden wird, so dass Kommunikation zwischen der mindestens einen Basisstation und dem ihr zugeordneten Base Station Controller über das Stromnetz miteinander ermöglicht wird. Insbesondere betrifft die Erfindung ein zelluläres GSM- und/oder UMTS-Mobilfunknetz.

Daten- und Voicekommunikation mittels Mobilfunknetzen ist heute kaum mehr aus dem modernen Leben wegzudenken. Öffentliche Mobilfunknetze (PLMN: Public Land Mobile Network) erlauben es den Benutzern, auf verschiedenste mobile Telekommunikationsdienste zuzugreifen. Ein solches Mobilfunknetz kann als Erweiterung des öffentlichen Festnetzes (PSTN: Public Switched Telephone Network) betrachtet werden. Es setzt sich typischerweise (wie es z.B. beschrieben ist in Digital cellular telecommunications system; Network architecture: GSM (Global System for Mobile communicationes); Technical Specification; European Telecommunications Standards Institute (ETSI), TS/SMG-030302Q) aus verschiedenen Sende- und Empfangsgebieten, welche einem sog. Mobile-services Switching Centre (MSC) zugeordnet sind, zusammen, wobei die Gebiete einen Destinationscode und einen gemeinsamen Routingplan haben. Ein MSC bildet das funktionale Interface zwischen dem Festnetz und dem Mobilfunknetz. Die MSCs stellen alle notwendigen Funktionen für Anrufe von oder zu einem Mobilfunkgerät zur Verfügung. Um Flächendeckung des Empfangs- und Sendebereichs in einem bestimmten geographischen Gebiet zu erhalten, sind im Normalfall mehrere Basisstationssysteme (BSS: Base Station System) notwendig; d.h. jedes MSC ist folglich ein Interface zu mehreren Basisstationssystemen. Umgekehrt sind im Normalfall mehrere MSCs nötig, um ein ganzes Land abzudecken. Ein BSS besteht aus einem Basis Station Controller (BSC) und einem oder mehreren Basisstationen (BTS: Base Transceiver Station). Eine Basisstation deckt eine sog. Empfangs-/Sendezelle ab. Das Basisstationssystem umfasst alle technisch notwendigen Mittel (Transceivers, Kontrollers etc.), so dass die MSC mit einem bestimmten Mobilfunkgerät in einer bestimmten Zelle kommunizieren kann. Ein BSC ist eine Netzwerkkomponente des Mobilfunknetzes, um eine oder mehrere Basisstationen anzusprechen.

Die mobile Telekommunikation über solche oben beschriebene öffentliche Mobilfunknetze hat in den letzten Jahren durch eine breite Palette neuer und verbesserter Angebote sowohl im technologischen Bereich als auch bei den Dienstleistungen ein grosses Wachstum in allen Sektoren verzeichnen können. Einer der Faktoren, die zu diesem Wachstum beigetragen haben, ist, dass ein Benutzer eines solchen Mobilfunknetzes immer und überall erreichbar sein würde. Trotz grossen Anstrengungen wurde dieses Ziel von der Industrie aber, unter anderem wegen den hohen Kosten bei der Installation eines flächendeckenden Antennennetzes mit Basisstationen, nicht überall erreicht. In Ballungszentren ist jedoch im Gegenteil zu beobachten, dass es durch sich konkurrenzierende Telekommunikationsgesellschaften zu einer Mehrfachabdeckung des gleichen Gebietes kommen kann. Dadurch entsteht eine unnötig grosse Belastung der Bevölkerung dieser Gebiete im Radiofrequenzbereich (Elektrosmog). Belastungsspitzen solcher Gebiete können insbesondere dadurch reduziert werden, dass strukturbedingte Abschirmungen durch lokalere Emfangs- und Sendestationen verringert oder umgangen werden. Die Suche nach neuen, kostenverträglichen Lösungen mit möglichst kleinen und trotzdem genügend grossen Empfangs- und Sendeleistungen in diesem Bereich erscheint heute wichtiger als je.

Die UK Patentanmeldung GB 2126845 A offenbart ein Verfahren und ein System zur Erweiterung von Mobilfunknetzen in geschlossenen Räumen wie z.B. Bergbauminen. Bei dem System wird das Trägersignal an existierende Stromversorgungskabel gekoppelt bzw. moduliert, welche die Mine mit Strom versorgen. Innerhalb der Mine wird das Signal von einer Sendestation demoduliert und mittels Repeater in der Mine ausgestrahlt. Die internationale Patentanmeldung WO 99/00906 zeigt ein Verfahren und ein System zum Übermitteln von Radiofrequenzsignalen über ein Stromnetz. Dazu wird die Frequenz der Signale bei einer ersten Station auf eine zweite Frequenz konvertiert und auf das Stromnetz moduliert. Eine zweite Station demoduliert die Signale vom Stromnetz und strahlt sie in ihrer ursprünglichen Frequenz ab. Die US-Patentschrift US 5832364 schliesslich offenbart ebenfalls ein System zum Übertragen von Radiofrequenzsignalen über ein Stromnetz. Ein Transceiver moduliert wie in der vorgenannten Patentschrift die Radiofrequenzsignale auf das Stromnetz. Ein zweiter Transceiver demoduliert die Signale und strahlt sie mit der ursprünglichen Frequenz ab.

Die internationale Patentanmeldung WO 02/09462 zeigt ein Verfahren zum Errichten einer Basisstation eines Mobilfunknetzes. Die Basisstationen werden dabei in bestehende Einrichtungen auf öffentlichem, nicht überdecktem Grund eingebaut, welche Einrichtungen über ein Stromnetz gespiesen werden. Die Signalübertragung der Radiofrequenzsignale erfolgt bidirektional zwischen Basisstation und Base Station Controller über das Stromnetz. Der Nachteil dieses Standes der Technik ist jedoch, dass solche Einrichtungen, insbesondere Strassenbeleuchtungsvorrichtungen, im Normalfall zeitlich begrenzt aktiviert sind. Z.B. werden Strassenbeleuchtungen aus wirtschaftlichen (energiespar) oder naturschützenden Gründen häufig nur nachts oder bei schlechter Sicht (Dämmerung, Nebel etc.) eingeschaltet. Während der nicht aktivierten Zeit können deshalb mit solchen Basisstationen des Standes der Technik keine Mobilfunknetze betrieben werden, falls diese öffentlichen Vorrichtungen nicht permanent betrieben werden.

In der Offenlegungsschrift DE 44 21 307 wird eine Fernsteuerungsanordnung für elektrische Geräte beschrieben, wobei eine Funksende-/Funkempfangseinrichtung mit einer Fernsteuerschnittstelle und eine dem elektrischen Gerät zugeordnete Fernsteuerungseinrichtung vorgesehen ist. Mittels an der Funksendeeinrichtung angebrachten Steuerungsmittel werden Fernsteuerungsbefehle erzeugt und an die Fernsteuerungseinrichtung übertragen. Die Fernsteuerungsanordnung bezieht sich insbesondere auf ein DECT-Schnurlostelefon (DECT: Digital European Cordless Telecommunication) und eine Basisstation. Fernzusteuernde elektrische Geräte umfassen beispielsweise Konsumgeräte in Haus oder Garten. Es ist vorgesehen, Fernsteuerbefehle mittels DTMF Sequenzen (DTMF: Dual Tone Multi Frequency) wie bei einer Fernabfrage eines Anrufbeantworters über eine Teilnehmervermittlungsanlage an die Fernsteuerungseinrichtung zu übermitteln.

Es ist eine Aufgabe dieser Erfindung, ein Mobilfunknetz und ein neues entsprechendes Verfahren zum Errichten einer Basisstation eines solchen Mobilfunknetzes und Verbinden der Basisstation mit einem solchen Mobilfunknetz vorzuschlagen, welche die oben erwähnten Nachteile nicht aufweisen. Insbesondere soll es eine Lösung sein, welche es erlaubt, Sende- und Empfangsgebiete kostengünstig und schnell auszubauen und dabei insbesondere ökonomische Aspekte betreffend Energieverbrauch zu berücksichtigen.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass in einem zellulären Mobilfunknetz mindestens eine Basisstation in jeweils eine über ein Stromnetz gespiesene Einrichtung eingebaut ist und mit einem zugeordneten Base Station Controller verbunden ist, wobei die mindestens eine Basisstation Mittel zum Austausch von Radiofrequenzsignalen mit Mobilfunkgeräten umfasst und wobei die mindestens eine Basisstation mit einem ersten Transceivermodul an das Stromnetz gekoppelt ist, ein zweites Transceivermodul an anderer Stelle ebenfalls an das Stromnetz gekoppelt ist, wodurch das Übertragen von den Radiofrequenzsignalen entsprechenden, elektrischen Signalen bidirektional zwischen den Transceivermodulen mittels der Transceivermodule über das Stromnetz ermöglicht wird, und das zweite Transceivermodul mit dem der mindestens einen Basisstation zugeordneten Base Station Controller verbunden wird, so dass Kommunikation zwischen der mindestens einen Basisstation und dem ihr zugeordneten Base Station Controller über das Stromnetz miteinander ermöglicht wird, wobei die Basisstation eine Kontrollvorrichtung zum Steuern der Einrichtung umfasst, wobei die Kontrollvorrichtung mit der Einrichtung übers Stromnetz und/oder direkt verbunden ist, und die Kontrollvorrichtung ein Identifikationsmodul umfasst und Mittel zum Kommunizieren mit einer Zentraleinheit umfasst, wobei die Kontrollvorrichtung mittels des Identifikationsmoduls von der Zentraleinheit identifizierbar ist. Die Kontrollvorrichtung der Basisstation kann z.B. von der Zentraleinheit über den zugeordneten Base Station Controller über die Transceivermodule steuerbar sein und z.B. über ein Mobilfunknetz mit der Zentraleinheit verbunden sein. Insbesondere kann die Kontrollvorrichtung z.B. mindestens Mittel zum Ein- und Ausschalten der Einrichtung umfassen. Die Erfindung hat u.a. den Vorteil, dass ein Minimum an neuen Installationen notwendig ist, um das Netz auszubauen, indem auf bestehende Infrastruktur zurückgegriffen wird. Dies betrifft nicht nur den Kostenaufwand, sondern auch den für den Bau benötigten Zeitaufwand für eine vergleichbare Standardinstallation von Basisstationen. Ein anderer Vorteil ist, dass die Sendeleistung der Basisstationen durch die verhältnismässig kleinen Zellgrössen bei den meist sehr lokalen Installationen klein gehalten werden kann. Dies kann bei den stets stärkeren staatlichen Reglementierungen entsprechend wichtig werden. Ein weiterer wichtiger Vorteil ist, dass die öffentlichen Vorrichtungen zeitkontrolliert betrieben werden können, ohne dass der Betrieb der Basisstationen dadurch betroffen wäre.

In einer Ausführungsvariante benutzen die Transceivermodule zur Übertragung ein Sendesignal, ein Empfangssignal sowie ein separates Kontrollsignal. Diese Ausführungsvariante hat insbesondere den Vorteil, dass sie den GSM-Anforderungen entspricht.

In einer weiteren Ausführungsvariante werden als öffentliche Einrichtungen zur Installation der Basisstationen Strassenbeleuchtungsvorrichtungen des Strassennetzes, wie z.B. Strassenlaternen oder andere Beleuchtungskörper von öffentlichen und privaten Anlagen etc., verwendet. Diese Ausführungsvariante hat u.a. den Vorteil, dass sie leicht zugängliche und weit verbreitete öffentliche Einrichtungen benutzt.

In einer weiteren Ausführungsvariante werden als öffentliche Einrichtungen zum Einbau der Basisstationen das Stromversorgungsnetz mit den dazu notwendigen Installationsvorrichtungen öffentlicher Verkehrsmittel verwendet. Diese Ausführungsvariante hat dieselben Vorteile wie die vorhergehende Ausführungsvariante.

In einer Ausführungsvariante besitzen der Base Station Controller und die mit ihm verbundenen Basisstationen jeweils einen Kontrollprozessor mit einem Modem, welcher Kontrollprozessor beispielsweise an ein Frequenztriplexer/Triplexfilter gekoppelt ist, mittels welchem Kontrollprozessor und Modem die Radiofrequenzsignale durch zwei Übertragungssignale und ein Kontrollsignal in einem separaten Frequenzbereich übertragbar sind. Diese Ausführungsvariante hat insbesondere die Vorteile, dass sie den GSM Anforderungen entspricht.

In einer weiteren Ausführungsvariante benutzen die Transceivermodule Frequency Shift Keying (FSK) als Frequenzmodulationstechnik für die Übertragung. Diese Ausführungsvariante hat insbesondere den Vorteil, dass die Übertragungssicherheit erhöht wird.

In einer weiteren Ausführungsvariante benutzen die Transceivermodule FDMA (Frequency Division Multiple Access) und/oder TDMA (Time Division Multiple Access) oder CDMA (Code Division Multiple Access) als Frequenzmodulationstechnik für die Übertragung. Diese Ausführungsvariante hat insbesondere den Vorteil, dass die Kombination aus TDMA und FDMA dem GSM-Standard und Breitband-CDMA mit einer Übertragungsrate von bis zu 2Mbit/Sekunde dem UMTS-Standard entspricht. In einer weiteren Ausführungsvariante wird OFDM angewendet (Orthogonal Frequency Division Multiplexing), dies hat insbesondere den Vorteil, dass die technischen Vorteile der TDMA- und CDMA- Konzepte kombinert werden. In einer anderen Ausführungsvariante benutzen die Transceivermodule ein Übertragungsfrequenzband zwischen 100MHz und 500MHz zur Übertragung der Radiofrequenzsignale über das Stromnetz. Dies hat u.a. die Vorteile, dass sich dieses Frequenzband für die Übertragung übers Stromnetz speziell eignet.

In einer weiteren Ausführungsvariante werden mit mindestens einer der Basisstationen zwei oder mehr unterschiedliche Empfangs-/Sendezellen mit unterschiedlicher Cell Group Identity abgedeckt.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben. Die Beispiele der Ausführungen werden durch folgende beigelegten Figuren illustriert:
Figur 1 zeigt ein Blockdiagramm, welches schematisch mittels Zeitkontrollmodul 14 zeitkontrollierte Strassenbeleuchtungsvorrichtungen 11 des öffentlichen Strassennetzes illustriert, wobei zusammenhängende Strassenbeleuchtungsvorrichtungen 11 mittels des Zeitkontrollmoduls 14 ein-und ausgeschaltet werden.
Figur 2 zeigt ein Blockdiagramm, welches schematisch ein Mobilfunknetz gemäss dem Stand der Technik illustriert, bei welcher Strassenbeleuchtungsvorrichtungen 11 des öffentlichen Strassennetzes verwendet werden.
Figur 3 zeigt ein Blockdiagramm, welches schematisch ein Ausführungsbeispiel eines Mobilfunknetzes gemäss der vorliegenden Erfindung illustriert, bei welcher Strassenbeleuchtungsvorrichtungen 11 des öffentlichen Strassennetzes verwendet werden.
Figur 4 zeigt ein Blockdiagramm, welches schematisch ein Ausführungsbeispiel einer in eine Strassenbeleuchtungsvorrichtung eingebauten Basisstation sowie das Transceivermodul 60 für die Verbindung zum Basis Station Controller illustriert.
Figur 5 zeigt ein Blockdiagramm, welches schematisch ein anderes Ausführungsbeispiel einer in eine Strassenbeleuchtungsvorrichtung eingebauten Basisstation sowie das Transceivermodul 61 für die Verbindung zum Basis Station Controller illustriert.
Figur 6 zeigt ein Blockdiagramm, welches schematisch ein Ausführungsbeispiel eines Mobilfunknetzes analog zu Figur 1 illustriert, wobei ein einem Base Station Controller (BSC) zugeordnetes Transceivermodul mit mehreren Transceivermodulen von verschiedenen Basisstationen gleichzeitig kommuniziert.
Figur 7 zeigt ein Blockdiagramm, welches schematisch ein Ausführungsbeispiel einer in eine Strassenbeleuchtungsvorrichtung eingebauten Basisstation illustriert, wobei die Basisstation zwei unterschiedliche Empfangs-/Sendezellen mit unterschiedlicher Cell Group Identity abdeckt.
Figur 8 zeigt ein Blockdiagramm, welches schematisch ein Ausführungsbeispiel eines Koppelelementes eines Transceivermoduls zur bidirektionalen Übertragung von den Radiofrequenzsignalen entsprechenden elektrischen Signalen auf das Stromnetz illustriert.
Figur 9 zeigt ein Blockdiagramm, welches schematisch ein Ausführungsbeispiel eines Mobilfunknetzes analog zum Ausführungsbeispiel von Figur 1 illustriert, wobei die bidirektionale Übertragung der Radiofrequenzsignale vom einen Transceivermodul zum anderen Transceivermodul und umgekehrt über ein dreiphasiges Stromnetz geschieht.

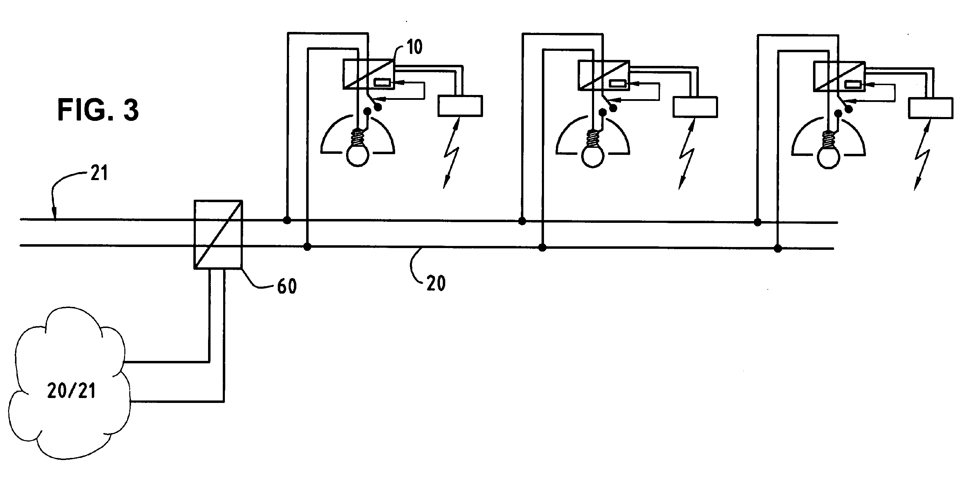

Figuren 3 bis 9 illustrieren eine Architektur, die zur Realisierung der Erfindung verwendet werden kann. In diesem Ausführungsbeispiel umfasst ein zelluläres Mobilfunknetz mindestens ein Mobile-services Switching Centre MSC mit einem dem Mobile-services Switching Centre MSC zugeordneten Sende-/Empfangsgebiet und ein oder mehrere Base Station Controller BSC1/BSC2 mit jeweils ein oder mehreren Basisstationen (BTS: Base Transceiver Station) 10. Der Aufbau des Mobilfunknetzes und seine Komponenten können z.B. gemäss dem GSM-Standard (Global System for Mobile Communications) des ETSI (European Telecommunications Standards Institute) oder dem UMTS-Standard (Universal Mobile Telephone System) erfolgen. Das Mobilfunknetz kann z.B. ein öffentliches Mobilfunknetz (PLMN: Public Land Mobile Network) sein. Das Mobilfunknetz ist beispielsweise über das Mobile-services Switching Centre MSC mit dem öffentlichen, geschalteten Telefonnetz (PSTN: Public Switched Telephone Network) 40 verbunden. Das Mobile-services Switching Centre MSC umfasst Schalt- und Signalfunktionen zum Verwalten von Mobilfunkgeräten. Die Base Station Controller BSC1/BSC2 sind mit dem Mobile-services Switching Centre MSC verbunden und umfassen Kontroll- und Steuerfunktionen für die Basisstationen 10. Jeweils eine oder mehrere der Basisstationen 10 sind mit einem gemeinsam zugeordneten Base Station Controller BSC verbunden und umfassen jeweils Mittel zum Austausch von Radiofrequenzsignalen mit Mobilfunkgeräten, welche Mobilfunkgeräte innerhalb des von einer Basisstation 10 abgedeckten Sende-/Empfangsgebietes, einer sog. Sende-/Empfangszelle, C₁...C₅ liegen. Die Basisstationen 10 werden in bestehende Einrichtungen 11 auf öffentlichem, nicht überdecktem Grund eingebaut, welche Einrichtungen 11 über ein Stromnetz 20/21 gespiesen werden oder über einen Stromnetzanschluss verfügen. Unter "bestehende" Einrichtungen sind Einrichtungen zu verstehen, die auch für andere Zwecke benutzt werden oder werden können, als für den Einbau von Basisstationen 10. Mit "öffentlichem Grund" sind hier im speziellen Orte gemeint, von welchen die Basisstationen 10 nicht überdecktes Gebiet C₁...C₅ mit Radiofrequenzsignalen abdecken. Die Orte können durchaus also auf privatem Gelände liegen. Beispielsweise sind solche bereits bestehenden Infrastrukturen auf öffentlichem, nicht überdecktem Gebiet Strassenbeleuchtungsvorrichtungen wie Strassenlaternen, Strassenlampen etc., Flutlichtstrahler für Sportplätze, Stadions u.ä., Einrichtungen zur Stromversorgung öffentlicher Verkehrsmittel, wie z.B. Strassenbahnen oder Eisenbahnen, aber auch solche Einrichtungen im weiteren Sinn wie Skilifteinrichtungen, Seilbahneinrichtungen etc.. In diesem Ausführungsbeispiel wurde als Einrichtungen 11 Strassenbeleuchtungsvorrichtungen 12 des öffentlichen Strassennetzes 50 dargestellt. Die Ziffer 13 bezeichnet die Antenne 13 einer Basisstation 10. Die Basisstationen 10 werden jeweils mit einem ersten Transceivermodul 60 an das Stromnetz 20 gekoppelt. Ein jeweils zweites Transceivermodul 61 wird an anderer Stelle ebenfalls an das Stromnetz 20 gekoppelt. Damit wird das Übertragen von den Radiofrequenzsignalen entsprechenden, elektrischen Signalen bidirektional zwischen den Transceivermodulen 60/61 über das Stromnetz 20 mittels den Transceivermodulen 60/61 ermöglicht. Die Kommunikation zwischen den Transceivermodulen 60/61 kann insbesondere basierend auf IPng (Internet Protocol next generation) bzw. einem anderen Internet Protokoll (IP) des IEFT (Internet Engineering Task Force) Standart Komitees realisiert sein. Darunter fallen insbesondere IPv6 und IPv4. Die Transceivermodule 61 werden mit dem der jeweiligen Basisstation 10 zugeordneten Base Station Controller BSC1/BSC2 verbunden, so dass Kommunikation zwischen den Basisstationen 10 und den ihnen zugeordneten Base Station Controller BSC1/BSC2 über das Stromnetz 20 und die Verbindung 30 stattfinden kann. Power Line Communication PLC, d.h. die Übermittlung von den Radiofrequenzsignalen entsprechenden elektrischen Signalen über das Stromnetz ist im Stand der Technik in verschiedenen Ausführungsvarianten bekannt. Beispiele solcher Anordnungen können in der Patentschrift WO98/06188 "Power Line Communications" oder in der Patentschrift US5977650 "Transmitting Communications Signals Over A Power Line Network" gefunden werden. Die Verbindung 30 zwischen den Transceivermodulen 61 und dem Base Station Controller BSC1/BSC2 kann z.B. über ein Koaxialkabel, ein optisches Kabel/Glasfaserkabel oder über ein Twisted Pair Kabel erfolgen. Benachbarte Sende-/Empfangszellen von Basisstationen konventioneller Mobilfunknetze weisen typischerweise eine Grösse zwischen 2 und 20 km auf. Dabei werden meist kurzreichweitige (low power) Basisstationen verwendet. In der vorliegenden Erfindung kann die Zellgrösse der einzelnen Zellen C₁...C₅ aber viel kleiner sein, zum Beispiel nur 50 m gross. Dies kann gerade beim Einbau von Basisstationen 10 in Strassenbeleuchtungsvorrichtungen 12 wie in diesem Ausführungsbeispiel der Fall sein. Das Handover bei solchen Mikrozellen C₁...C₅, d.h. die Übergabe der Verbindung eines Mobilfunkgeräts eines sich bewegenden Benutzers von der Basisstation 10 einer Zelle Cᵢ an die Basisstation der nächstfolgenden Zelle Cᵢ₊₁ rsp. Cᵢ₋₁, muss wegen der Grösse der Mikrozellen C₁...C₅ sehr schnell erfolgen können und ist ebenfalls im Stand der Technik in verschiedenen Ausführungsvarianten bekannt und beschrieben. Ein Beispiel eines solchen Verfahren wird in der Patentschrift US5189734 "Cellular radio system" beschrieben.

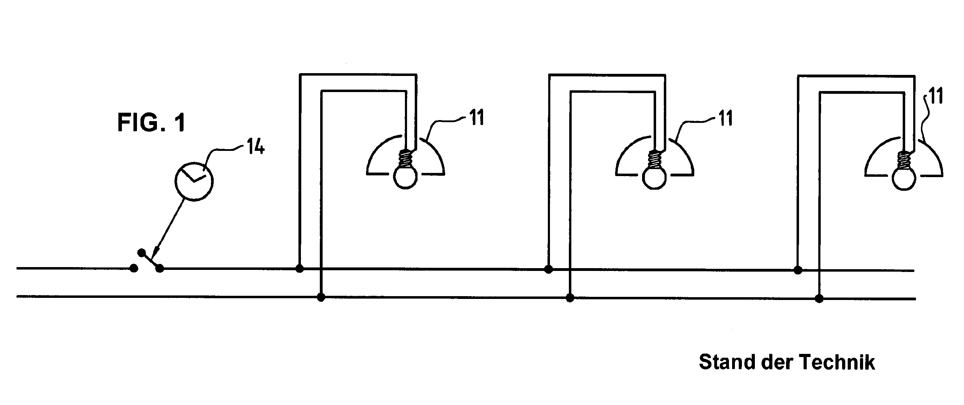

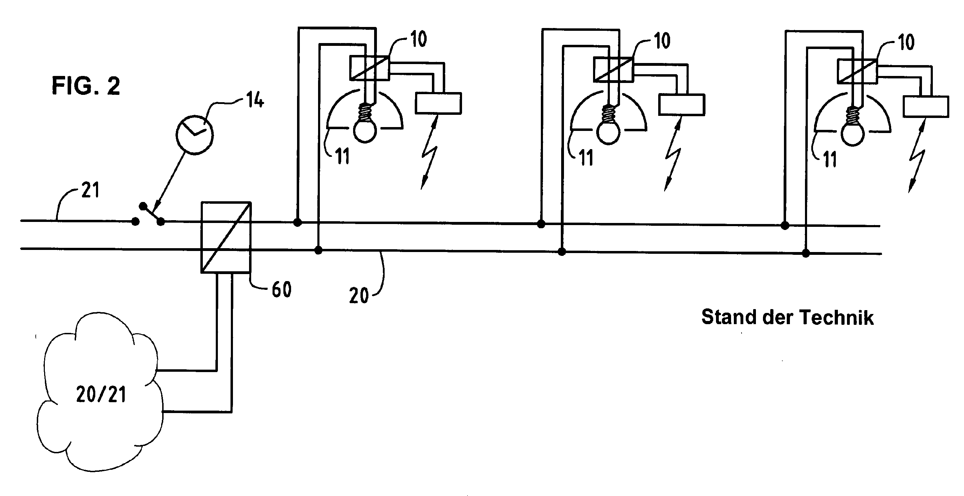

Die Basisstation 10 umfasst eine Kontrollvorrichtung 80 zum Steuern der Einrichtung 11. Die Kontrollvorrichtung kann mit der Einrichtung 11 übers Stromnetz 20/21 und/oder direkt verbunden sein. Die Kontrollvorrichtung kann der Einrichtung 11 im Stromnetz 20/21 z.B. zum Ein- Ausschalten vorgeschaltet sein. Die Kontrollvorrichtung 80 umfasst ein Identifikationsmodul 81 und Mittel zum Kommunizieren mit einer Zentraleinheit, wobei die Kontrollvorrichtung 80 mittels des Identifikationsmoduls 81 von der Zentraleinheit identifizierbar ist. Das Identifikationsmodul 81 kann z.B. eine Smartcards oder SIM-Karten (Subscriber Identity Module) umfassen. Die Identifikation kann z.B. mittels einer eindeutigen Identifikationsnummer wie Prozessomummer, Gerätenummer, IMSI (International Mobile Subscriber Identity) oder MSISDN (Mobile Subscriber ISDN) Nummern erfolgen. Die Kontrollvorrichtung 80 kann z.B. von der Zentraleinheit über den zugeordneten Base Station Controller über die Transceivermodule gesteuert werden. Die Kontrollvorrichtung 80 der Basisstation kann weiter z.B. auch über ein Mobilfunknetz mit der Zentraleinheit verbunden sein. Die Kontrollvorrichtung 80 kann z.B. mindestens Mittel zum Ein- und Ausschalten der Einrichtung 11 umfassen. Figur 1 und 2 zeigen Ausführungen des Standes der Technik ohne vorgeschaltetes Kontrollmodul 80. Die Strassenbeleuchtungen werden hier über die Zeitkontrollmodul 14 gesteuert bzw. ein- und ausgeschaltet.

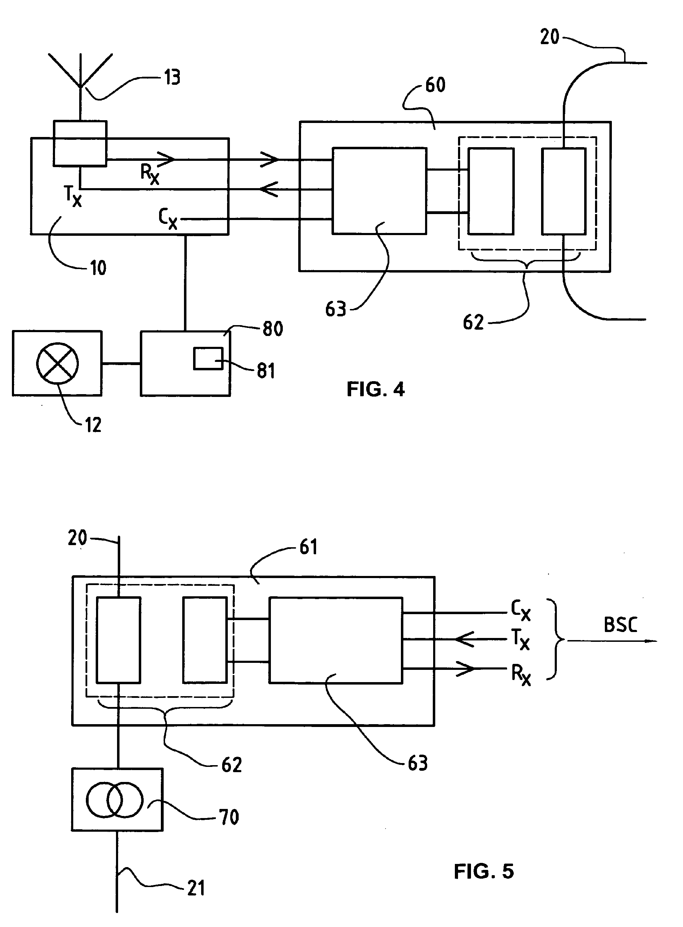

Die Figuren 4 und 5 stellen detaillierter die Transceivermodule 60/61 dar. Wie im vorhergehenden Ausführungsbeispiel wird jeweils das Radiofrequenzsignal mittels zweier Transceivermodulen 60/61 über das Stromnetz 20 bidirektional zwischen den Basisstationen 10 und Base Station Controller BSC übertragen. Dem Transceivermodul 61 kann ein Transformatormodul 70 vorgeschaltet sein, welches, falls notwendig, die elektrische Spannung der Zuführungsleitung 21 (z.B. 11 kV (kVolt)) auf die von den Strassenbeleuchtungsvorrichtungen 12 benötigte Spannung von z.B. 230 V rsp. 400 V transformiert. Die Transceivermodule 60/61 bestehen jeweils aus einem Koppelelement 62, mittels welchen die Transceivermodule 60/61 an das Stromnetz gekoppelt werden, sowie aus einem Modemmodul 63, welches den Radiofrequenzsignalen entsprechend dem Stromnetz 20 moduliert bzw. demoduliert. Das Modemmodul 63 der Basisstationen 10 umfasst insbesondere die Funktion Radiofrequenzsignale des Frequenzbandes bidirektional zu konvertieren, welches Frequenzband sich zum Senden und Empfangen im freien Raum eignet (d.h. zwischen der Antenne 13 der Basisstation und den sich in der zugeordneten Sende-/Empfangszelle befindlichen Mobilfunkgeräten, z.B. 900/1800 MHz) auf das Frequenzband, welches sich für die Übertragung der Signale über das Stromnetz eignet (z.B. zwischen 100 MHz und 500 MHz). Auf der anderen Seite umfasst das dem Base Station Controller BSC zugeordnete Modemmodul 63 die Funktion, das Übertragungsfrequenzband der Signale auf dem Stromnetz 20 bidirektional in ein für die Übertragung an den Base Station Controller BSC, z.B. über Glasfaserkabel oder Koaxialkabel geeignetes Frequenzband, zu konvertieren. Die Transceivermodule 60/61 können z.B. Frequency Shift Keying, Frequency Hoping, FDMA (Frequency Division Multiple Access), TDMA (Time Division Multiple Access: GSM verwendet eine Kombination aus TDMA und FDMA) oder CDMA (Code Division Multiple Access, im speziellen für UMTS, welches mit Breitband-CDMA eine Übertragungsrate von bis zu 2Mbit/Sekunde erreicht) als Frequenzmodulationstechnik für die Übertragung verwenden. Aber auch andere Modulationstechniken sind natürlich vorstellbar, wie ASK (Amplitude Shift Keying) oder PSK (Phase Shift Keying). Das Übertragungsfrequenzband kann z.B. zwischen 50 MHz und 500 MHz aber z.B. auch unter 400 kHz liegen. Tieffrequenzsignale lassen sich i.N. besser über das Stromnetz übertragen. Es hat sich aber gezeigt, dass Radiofrequenzsignale in einem Frequenzband zwischen 100 MHz und 500 MHz in den meisten Fällen ein vernünftiges Verhältnis zwischen Übertragungsdistanz und Rauschen ergeben. Das Frequenzband zwischen 400 kHz und 50 MHz eignet sich für die Übertragung in den meisten Fällen weniger, da es grosse Spektralrauschkomponenten besitzt, während sich bei Übertragungsfrequenzen über 500 MHz das Radiofrequenzsignal meist zu rasch abschwächt, als dass das Stromnetz als Übertragungsmedium noch sinnvoll ist. Zur Übertragung können die Transceivermodule 60/61 z.B. drei separate Signale verwenden, beispielsweise ein Sendesignal Tₓ, ein Empfangssignal Rₓ sowie ein Kontrollsignal Cₓ. Das Kontrollsignal Cₓ umfasst z.B. Set-up- und Alarminformationen für resp. von der Basisstation 10. Die Transceivermodule 60/61 umfassen beispielsweise einen Kontrollprozessor mit Modem. Der Kontrollprozessor ist an ein Frequenztriplexer/Triplexfilter gekoppelt, wodurch die zwei Übertragungssignale Tₓ und Rₓ und das Kontrollsignal Cₓ in einem separaten Frequenzbereich übertragbar sind. Wie erwähnt kann bei UMTS ein Kanal bis 2 Mbps betragen, was mit den beiden Signalen Rₓ und Tₓ bis 4 Mbps bedeutet. So ist das Frequenzband unter 400 kHz meist ungeeignet, die beiden Kanäle Rₓ und Tₓ zu übertragen. Aber das Frequenzband kann unter 400 kHz zum Beispiel zum Übertragen des Kontrollsignal Cₓ verwendet werden.

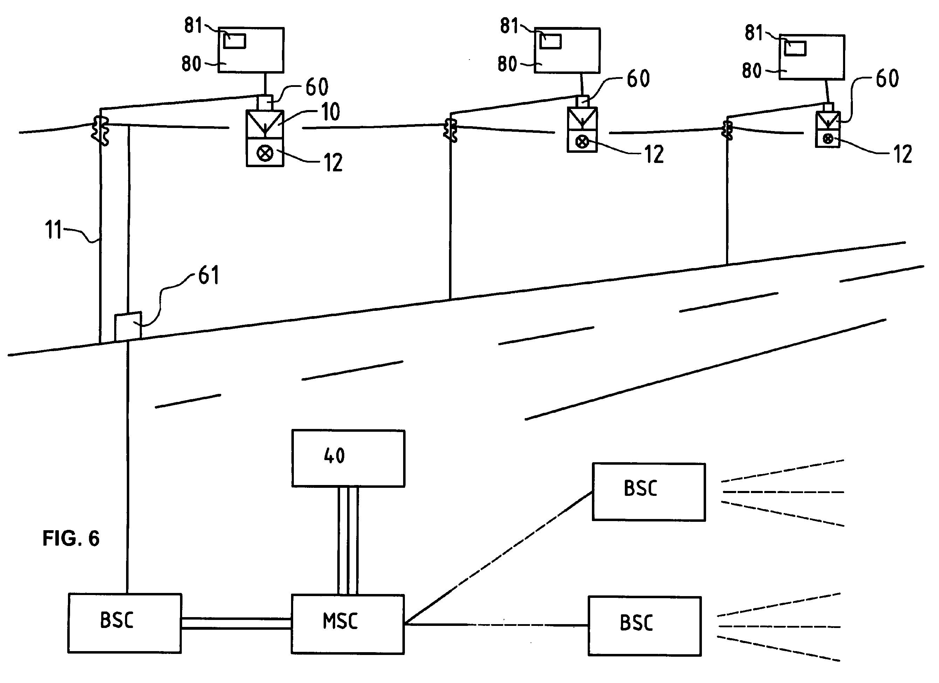

Figur 6 stellt noch einmal ein Ausführungsbeispiel eines Mobilfunknetzes analog zum Ausführungsbeispiel von Figur 3 dar, bei welchem Mobilfunknetz mehrere der bestehenden Einrichtungen 11 an derselben elektrischen Leitung mit derselben Spannung hängen, ohne dass diese Einrichtungen 11 durch Transformatormodule 70 voneinander abgetrennt sind. In einem solchem Ausführungsbeispiel kann ein einem Base Station Controller (BSC) zugeordnetes Transceivermodul 61 mit mehreren Transceivermodulen 60 von verschiedenen Basisstationen 10 kommunizieren, wie es in Figur 6 illustriert ist.

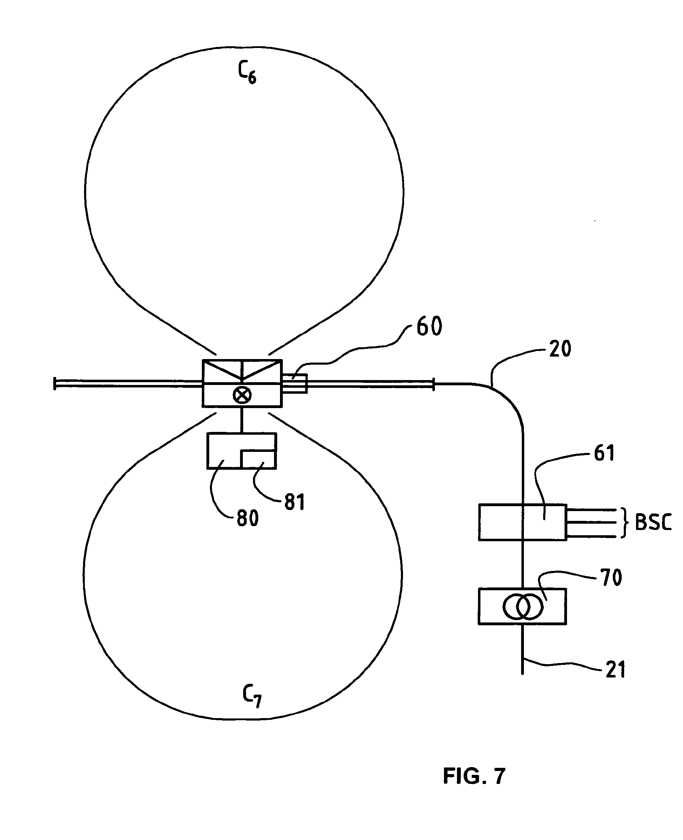

Figur 7 ist ein Ausführungsbeispiel mit einem Mobilfunknetz analog zum Ausführungsbeispiel von Figur 3. In diesem Ausführungsbeispiel werden aber von mindestens einer der in bestehende Einrichtungen 11 eingebauten Basisstationen 10 zwei oder mehrere unterschiedliche Empfangs-/Sendezellen C_{6...7} mit unterschiedlicher Cell Group Identity abgedeckt. Dies kann z.B. unter Ausnutzung der Richtcharakteristik der Antennen erreicht werden. Das Ausführungsbeispiel von Figur 7 entspricht dem Einbau von zwei oder mehreren Basisstationen 10 gemäss der Anzahl Empfangs-/Sendezellen C_{6...7}. Jede Empfangs-/Sendezellen C_{6...7} besitz ihre(n) eigene(n) Kanäl(e), so dass, falls ein Mobilfunkgerät von der einen Empfangs-/Sendezelle zur anderen Empfangs-/Sendezelle bewegt wird, ein Handover stattfindet.

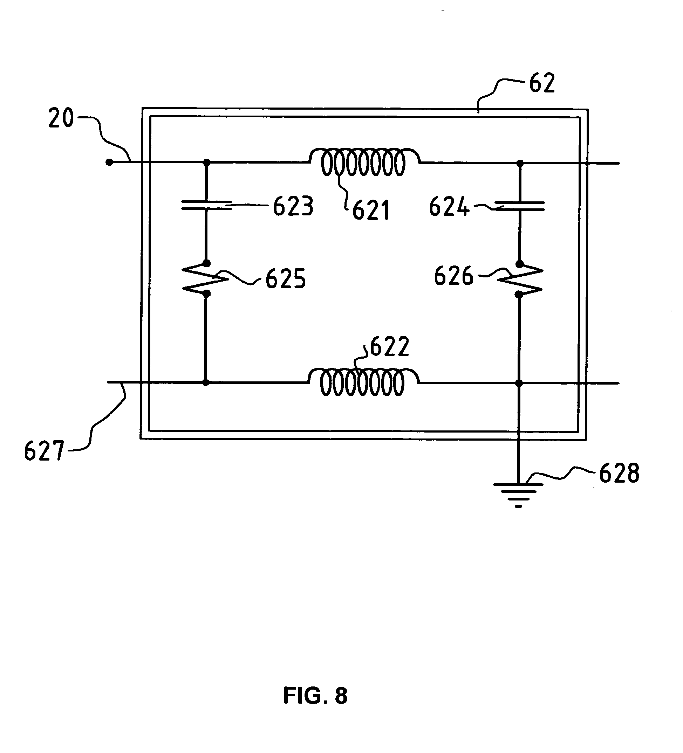

Figur 8 illustriert eine Architektur, wie sie zur Realisierung des Koppelelements 62 in einem Transceivermodul analog zu den Ausführungsbeispielen der Figuren 4 und 5 verwendet werden kann. Das Koppelelement 62 ist über die Verbindung 20, d.h. einen elektrischen Leiter, an das Stromnetz angekoppelt. Die Stromversorgung der bestehenden Einrichtungen kann wie in diesem Ausführungsbeispiel z.B. mit 230 V und 50 Hz bei max. 100A geschehen. Das Koppelelement 62 umfasst eine primäre Induktivität 621 von z.B. 50 µH bis 200 µH in Abhängigkeit von der benötigten Signalcharakteristik. Die Induktivität 621 des Stromnetzes 20 ist über zwei Koppelkondensatoren 623/624 an die Signalinput/-outputverbindung 627 angekoppelt. Die Verbindung 627 verbindet das Koppelelement 62 mit dem Modemmodul, welches vom Base Station Controller an die Basisstation oder umgekehrt zu übermittelnde Signale in den für die Übertragung geeigneten Frequenzbereich moduliert. Die beiden Koppelkondensatoren 623/624 können z.B. eine Kapazität von 0.01 µF bis 0.5 µF aufweisen. Der zweite Koppelkondensator 624 erzeugt zusammen mit dem ersten Koppelkondensator 623 eine weitere Dämpfung, indem er mit Erde 628 verbunden wird. Die Signalinput/-outputverbindung 627 umfasst eine sekundäre Induktivität 622, z.B. von minimal 250 µH. Die beiden Koppelkondensatoren 623/624 können zusätzlich durch zwei Sicherungen 625/626, z.B. Schmelzsicherungen, ergänzt werden. Falls in diesem Fall die beiden Koppelkondensatoren 623/624 aus irgendwelchen Gründen versagen, ist die Induktivität 622 für den elektrischen Hauptstrom mit Erde verbunden und die Sicherung 626 wird zerstört. Dies kann somit als zusätzliche Sicherheit dienen. Es ist zu erwähnen, dass bei dem Koppelelement 62 sowohl induktive Kopplung (z.B. durch einen Kopplungstransformator für Hochfrequenzen) als auch kapazitive Kopplung oder eine Kombination von beiden verwendet werden kann. Koppelelemente der hier beschriebenen Funktionalität können in verschiedenen Ausführungvarianten im Stand der Technik gefunden werden.

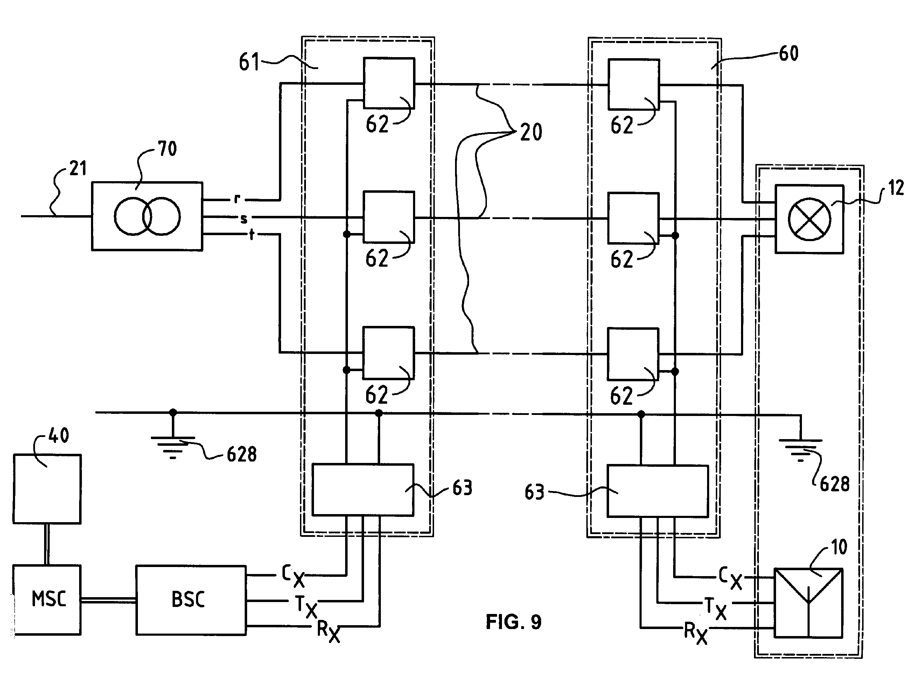

Figur 9 illustriert eine Architektur, die zur Realisierung von Transceivermodulen 60/61 eines Mobilfunknetzes analog zum Ausführungsbeispiel von Figur 3 mit einer in eine der genannten bestehenden Einrichtungen eingebauten Basisstation 10 verwendet werden kann. In diesem Ausführungsbeispiel ist ein Transformatormodul 70 über den elektrischen Leiter 21 mit einem mehrphasigen Hauptnetz mit z.B. 11 kV verbunden. Das Transformatormodul 70 transformiert die elektrische Spannung auf die von der genannten bestehenden Einrichtung (in diesem Ausführungsbeispiel eine Strassenbeleuchtungsvorrichtungen 12) benötigten Spannung. In diesem Ausführungsbeispiel wird die Spannung auf die 400 V eines 3-Phasen Stromnetzes r/s/t transformiert. Jede der Phasen r/s/t kann z.B. nur eine einzelne solche Einrichtung versorgen, oder die Einrichtungen können von allen drei Phasen r/s/t versorgt werden, falls dies benötigt wird, wie z.B. bei verschiedenen Flutlichtstrahlern etc., 628 ist auch in diesem Ausführungsbeispiel die Erde. Das Mobile-service Switching Centre MSC ist ebenfalls, wie in den vorhergehenden Ausführungsbeispielen, mit dem öffentlichen, geschalteten Telefonnetz (PSTN) 40 verbunden und das Mobile-service Switching Centre MSC seinerseits mit dem Base Station Controller BSC. Die Radiofrequenzsignale werden mittels zweier Transceivermodulen 60/61 über das Stromnetz 20 bidirektional zwischen Basisstation 10 und Base Station Controller BSC übertragen. Dies geschieht, indem das Modemmodul 63 die zu übertragenden Signale analog zum vorhergehenden Ausführungsbeispiel moduliert und auf die Koppelelemente 62 überträgt. Die Input-/Outputsignale Cₓ, Rₓ und Tₓ können nur auf eine Phase, mehrere Phasen oder alle möglichen vorhandenen Phasen übertragen werden. Da die Phasen r/s/t im Stromnetz kapazitiv koppeln, können die Input-/Outputsignale Cₓ/Rₓ/Tₓ, wenn auch die Signale nur auf eine Phase übertragen werden, beim gegenüberliegenden Transceivermodul von irgendeinem der Koppelelemente 62 übernommen werden oder ebenfalls separat abgenommen werden. Die Koppelelemente 62 können u.a. einen Tiefpassfilter umfassen, um die Signale zu separieren. Die Strassenbeleuchtungsvorrichtung 12 ist ebenfalls an das Stromnetz 20 angeschlossen.

Es ist zu ergänzen, dass die Modemmodule 63 im Ausführungsbeispiel der Figur 9 ein 3-Weg-Splittelement umfassen können. Die drei Phasen des Stromnetzes 20 sind jeweils über eine separate Stromschiene in dem Transformatormodul 70 an das Stromnetz 21 gekoppelt. Die drei Koppelelemente 62 der Transceivermodule 60/61 können auch komplexere Hochpassfilterelemente umfassen. Die Koppelelemente 62 werden u.a. auch als Radiofrequenz "Jumper" bezeichnet, welche üblicherweise einen AC-Blocker und ein Radiofrequenzkoppelelement (kapazitiv und/oder induktiv) umfassen. Die Koppelelemente 62 dienen dazu, nur Signale im Radiofrequenzband, welche zur Übermittlung der Telekommunikationssignale verwendet werden, durchzulassen und dabei zu verhindern, dass der elektrische Hauptstrom des Stromnetzes 20 zum Base Station Controller BSC resp. zur Basisstation 10 gelangt. Zwischen den Transceivermodulen 60/61 werden die Telekommunikationssignale in beiden Richtungen übertragen; in Richtung der Basisstation 10 als auch in Richtung des Base Station Controllers BSC. Sind die Radiofrequenzsignale von dem Base Station Controller BSC auf die Basisstation 10 übertragen, werden sie via Antenne in die der Basisstation 10 zugeordneten Empfangs-/Sendezelle abgestrahlt. In umgekehrter Richtung werden Radiofrequenzsignale von Mobilfunkgeräten in der einer Basisstation 10 zugeordneten Empfangs-/Sendezelle via Antenne 13 empfangen und über die Transceivermodule 60/61 und das Stromnetz 20 zum Base Station Controller BSC übertragen. Im Stand der Technik können verschiedenste Ausführungsbeispiele von Power Line Communication (PLC) gefunden werden. Weiter ist darauf hinzuweisen, dass sich die vorliegende Erfindung nicht auf Radiofrequenzsignale von Mobilfunknetzen nach der GSM/UMTS Spezifikation beschränken muss. Mit der vorliegenden Erfindung können auch Radiofrequenzsignale von Personal Communication Systemen, Broadcast Video (DVB), Broadcast Audio (DAB), Paging, Zweiweg- oder direktes Satellitenbroadcasting, drahtlose Netzwerke insbesondere MAN (wireless Metropolitan Area Network) oder WiFi nach der IEEE 811.x Spezifikation und/oder Radiofrequenztelemetrie sowie WLL (Wireless Local Loop) sowie OFDM-Systeme übertragen werden.

## Patentansprüche

1. Zelluläres Mobilfunknetz, wobei mindestens eine Basisstation (10) in jeweils eine über ein Stromnetz (20/21) gespiesene Einrichtung (11) eingebaut ist und mit einem zugeordneten Base Station Controller verbunden ist, wobei die mindestens eine Basisstation (10) Mittel zum Austausch von Radiofrequenzsignalen mit Mobilfunkgeräten umfasst und wobei die mindestens eine Basisstation (10) mit einem ersten Transceivermodul (60) an das Stromnetz (20/21) gekoppelt ist, ein zweites Transceivermodul (61) an anderer Stelle ebenfalls an das Stromnetz (20/21) gekoppelt ist, wodurch das Übertragen von den Radiofrequenzsignalen entsprechenden, elektrischen Signalen bidirektional zwischen den Transceivermodulen (60/61) mittels der Transceivermodule (60/61) über das Stromnetz (20/21) ermöglicht wird, und das zweite Transceivermodul (61) mit dem der mindestens einen Basisstation (10) zugeordneten Base Station Controller verbunden wird, so dass Kommunikation zwischen der mindestens einen Basisstation (10) und dem ihr zugeordneten Base Station Controller über das Stromnetz (20/21) miteinander ermöglicht wird, **dadurch gekennzeichnet,**
**dass** die Basisstation (10) eine Kontrollvorrichtung (80) zum Steuern der Einrichtung (11) umfasst, wobei die Kontrollvorrichtung (80) mit der Einrichtung (11) übers Stromnetz (20/21) und/oder direkt verbunden ist,
**dass** die Kontrollvorrichtung (80) ein Identifikationsmodul (81) und Mittel zum Kommunizieren mit einer Zentraleinheit umfasst, wobei die Kontrollvorrichtung (80) mittels des ldentifikationsmoduls (81) von der Zentraleinheit identifizierbar ist, und
**dass** die Kontrollvorrichtung (80) der Basisstation (10) von der Zentraleinheit über den zugeordneten Base Station Controller über die Transceivermodule (60/61) steuerbar ist.

2. Zelluläres Mobilfunknetz nach Anspruch 1, **dadurch gekennzeichnet, dass** die Kontrollvorrichtung (80) mindestens Mittel zum Ein-und Ausschalten der Einrichtung (11) umfasst.

3. Zelluläres Mobilfunknetz nach einem der Ansprüche 1 bis 2, **dadurch gekennzeichnet, dass** die Transceivermodule (60/61) zur Übertragung ein Sendesignal, ein Empfangssignal sowie ein separates Kontrollsignal benutzen.

4. Zelluläres Mobilfunknetz nach Anspruch 1 bis 3, **dadurch gekennzeichnet, dass** die genannten Einrichtungen (11) Strassenbeleuchtungsvorrichtungen (12) des Strassennetzes (50) sind.

5. Zelluläres Mobilfunknetz nach Anspruch 1 bis 4, **dadurch gekennzeichnet, dass** die genannten Einrichtungen (11) Stromversorgungsnetze öffentlicher Verkehrsmittel sind.

6. Zelluläres Mobilfunknetz nach einem der Ansprüche 1 bis 5, **dadurch gekennzeichnet, dass** die Transceivermodule (60/61) jeweils einen Kontrollprozessor mit Modem (63) umfassen, welcher Kontrollprozessor an ein Frequenztriplexer/Triplexfilter gekoppelt ist, mittels welchen die Radiofrequenzsignale durch zwei Übertragungssignale und ein Kontrollsignal in einem separaten Frequenzbereich übertragbar sind.

7. Zelluläres Mobilfunknetz nach einem der Ansprüche 1 bis 6, **dadurch gekennzeichnet, dass** die Transceivermodule (60/61) Frequency Shift Keying als Frequenzmodulationstechnik für die Übertragung benutzen.

8. Zelluläres Mobilfunknetz nach einem der Ansprüche 1 bis 7, **dadurch gekennzeichnet, dass** die Transceivermodule (60/61) Frequency Division Multiple Access und/oder Time Division Multiple Access, Code Division Multiple Access und/oder Orthogonal Frequency Division Multiplexing als MFrequenzmodulationstechnik für die Übertragung benutzen.

9. Zelluläres Mobilfunknetz nach einem der Ansprüche 1 bis 8, **dadurch gekennzeichnet, dass** die Transceivermodule (60/61) ein Übertragungsfrequenzband zwischen 100 MHz und 500 MHz zur Übertragung der Radiofrequenzsignale über das Stromnetz (20/21) benutzen.

10. Zelluläres Mobilfunknetz nach einem der Ansprüche 1 bis 9, **dadurch gekennzeichnet, dass** mit mindestens einer der Basisstationen (10) zwei oder mehr unterschiedliche Empfangs-/Sendezellen mit unterschiedlicher Cell Group Identity abdeckbar sind.

11. Verfahren zum Errichten einer Basisstation (10) eines zellulären Mobilfunknetzes und Verbinden der Basisstation (10) mit dem Mobilfunknetz, wobei mindestens eine Basisstation (10) in jeweils eine über ein Stromnetz (20/21) gespiesene Einrichtung (11) eingebaut wird und mit einem zugeordneten Base Station Controller verbunden wird, wobei die mindestens eine Basisstation (10) Mittel zum Austausch von Radiofrequenzsignalen mit Mobilfunkgeräten umfasst und wobei die mindestens eine Basisstation (10) mit einem ersten Transceivermodul (60) an das Stromnetz (20/21) gekoppelt wird, ein zweites Transceivermodul (61) an anderer Stelle ebenfalls an das Stromnetz (20/21) gekoppelt wird, wodurch das Übertragen von den Radiofrequenzsignalen entsprechenden, elektrischen Signalen bidirektional zwischen den Transceivermodulen (60/61) mittels der Transceivermodule (60/61) über das Stromnetz (20/21) ermöglicht wird, und das zweite Transceivermodul (61) mit dem der mindestens einen Basisstation (10) zugeordneten Base Station Controller verbunden wird, so dass Kommunikation zwischen der mindestens einen Basisstation (10) und dem ihr zugeordneten Base Station Controller über das Stromnetz (20/21) miteinander ermöglicht wird, **dadurch gekennzeichnet,**
**dass** eine Kontrollvorrichtung (80) der Basisstation (10) der Einrichtung (11) im Stromnetz (20/21) vorgeschaltet wird, wobei die Einrichtung (11) mittels der Kontrollvorrichtung (80) gesteuert wird,
**dass** eine Zentraleinheit über ein Netzwerk mit der Kontrollvorrichtung (80) kommuniziert, wobei die Kontrollvorrichtung (80) mittels eines ldentifikationsmoduls von der Zentraleinheit eindeutig identifiziert wird, und
**dass** die Kontrollvorrichtung (80) der Basisstation (10) von der Zentraleinheit über den zugeordneten Base Station Controller über die Transceivermodule (60/61) gesteuert wird.

12. Verfahren nach Anspruch 11, **dadurch gekennzeichnet, dass** die Einrichtung (11) mittels der Kontrollvorrichtung (80) ein- und ausgeschaltet wird.

13. Verfahren nach einem der Ansprüche 11 bis 12, **dadurch gekennzeichnet, dass** die Transceivermodule (60/61) zur Übertragung ein Sendesignal, ein Empfangssignal sowie ein separates Kontrollsignal benutzen.

14. Verfahren nach einem der Ansprüche 11 bis 13, **dadurch gekennzeichnet, dass** als öffentliche Einrichtungen (11) zum Einbau der mindestens einen Basisstation (10) Strassenbeleuchtungsvorrichtungen (12) des Strassennetzes (50) verwendet werden.

15. Verfahren nach einem der Ansprüche 11 bis 14, **dadurch gekennzeichnet, dass** als öffentliche Einrichtungen (11) zum Einbau der mindestens einen Basisstation (10) Stromversorgungsnetze öffentlicher Verkehrsmittel verwendet werden.

16. Verfahren nach einem der Ansprüche 11 bis 15, **dadurch gekennzeichnet, dass** der Base Station Controller und die mit ihm verbundenen Basisstationen (10) jeweils einen Kontrollprozessor mit Modem (63) umfassen, mittels welchen die Radiofrequenzsignale durch zwei Übertragungssignale und ein Kontrollsignal in einem separaten Frequenzbereich übertragbar sind.

17. Verfahren nach einem der Ansprüche 11 bis 16, **dadurch gekennzeichnet, dass** bei den Transceivermodulen (60/61) Frequency Shift Keying als Frequenzmodulationstechnik für die Übertragung verwendet wird.

18. Verfahren nach einem der Ansprüche 11 bis 17, **dadurch gekennzeichnet, dass** bei den Transceivermodulen (60/61) Frequency Division Multiple Access und/oder Time Division Multiple Access, Code Division Multiple Access und/oder Orthogonal Frequency Division Multiplexing als MFrequenzmodulationstechnik für die Übertragung verwendet wird.

19. Verfahren nach einem der Ansprüche 11 bis 18, **dadurch gekennzeichnet, dass** bei den Transceivermodulen (60/61) ein Übertragungsfrequenzband zwischen 100 MHz und 500 MHz zur Übertragung der Radiofrequenzsignale über das Stromnetz (20/21) verwendet wird.

20. Verfahren nach einem der Ansprüche 11 bis 19, **dadurch gekennzeichnet, dass** mindestens eine der Basisstationen (10) zwei unterschiedliche Empfangs-/Sendezellen mit unterschiedlicher Cell Group Identity abdeckt.

## Claims

1. Cellular mobile network, whereby at least one base station (10) is each installed in a facility (11) being fed by a power supply system (20/21) and is connected to an assigned base station controller, whereby the at least one base station (10) includes means for exchanging radio-frequency signals with mobile radio devices and whereby the at least one base station (10) is coupled to the power supply system (20/21) by means of a first transceiver module (60), a second transceiver module (61) elsewhere is likewise coupled to the power supply system (20/21), as a result of which the bidirectional transmission between the transceiver modules (60/61) via the power supply system (20/21) of electrical signals corresponding to the radio-frequency signals is enabled by means of the transceiver modules (60/61), and the second transceiver module (61) is connected to the base station controller assigned to the at least one base station (10), so that communication between the at least one base station (10) and the base station controller assigned to it via the power supply system (20/21) is enabled, **characterized in that**
the base station (10) includes a control device (80) for controlling the facility (11), whereby the control device (80) is connected to the facility (11) via the power supply system (20/21) and/or directly,
the control device (80) includes an identification module (81) and means for communicating with a central unit, whereby the control device (80) can be identified by the central unit by means of the identification module (81), and
the control device (80) of the base station (10) can be controlled by the central unit via the assigned base station controller via the transceiver modules (60/61).

2. Cellular mobile network in accordance with claim 1, **characterized in that** the control device (80) includes at least means for switching the facility (11) on and off.

3. Cellular mobile network in accordance with one of claims 1 to 2, **characterized in that**, for the purpose of transmission, the transceiver modules (60/61) use a transmit signal, a receive signal, and a separate control signal.

4. Cellular mobile network in accordance with claims 1 to 3, **characterized in that** the facilities (11) mentioned are street-lighting devices (12) of the road network (50).

5. Cellular mobile network in accordance with claims 1 to 4, **characterized in that** the facilities (11) mentioned are supply networks for public transport.

6. Cellular mobile network in accordance with one of claims 1 to 5, **characterized in that** each of the transceiver modules (60/61) includes a control processor with modem (63), which control processor is coupled to a frequency triplexer/triplex filter, by means of which the radio-frequency signals can be transmitted by means of two transfer signals and a control signal in a separate frequency range.

7. Cellular mobile network in accordance with one of claims 1 to 6, **characterized in that** the transceiver modules (60/61) use frequency shift keying as the frequency-modulation technique for the transmission.

8. Cellular mobile network in accordance with one of claims 1 to 7, **characterized in that** the transceiver modules (60/61) use frequency division multiple access and/or time division multiple access, code division multiple access and/or orthogonal frequency division multiplexing as the frequency-modulation technique for the transmission.

9. Cellular mobile network in accordance with one of claims 1 to 8, **characterized in that** the transceiver modules (60/61) use a transmission frequency band between 100 MHz and 500 MHz for transmitting the radio-frequency signals via the power supply system (20/21).

10. Cellular mobile network in accordance with one of claims 1 to 9, **characterized in that** two or more different receive/transmit cells with different cell group identities can be covered by at least one of the base stations (10).

11. Method for setting up a base station (10) of a cellular mobile network and for connecting the base station (10) to the mobile network, whereby at least one base station (10) is each installed in a facility (11) being fed by a power supply system (20/21) and is connected to an assigned base station controller, whereby the at least one base station (10) includes means for exchanging radio-frequency signals with mobile radio devices, and whereby the at least one base station (10) is coupled by a first transceiver module (60) to the power supply system (20/21), a second transceiver module (61) elsewhere is likewise coupled to the power supply system (20/21), as a result of which the bidirectional transmission between the transceiver modules (60/61) via the power supply system (20/21) of electrical signals corresponding to the radio-frequency signals is enabled by means of the transceiver modules (60/61), and the second transceiver module (61) is connected to the base station controller assigned to the at least one base station (10), so that communication is enabled between the at least one base station (10) and the base station controller assigned to it via the power supply system (20/21), **characterized in that**
a control device (80) of the base station (10) is connected in series upstream of the facility (11) in the power supply system (20/21), whereby the facility (11) is controlled by means of the control device (80),
a central unit communicates with the control device (80) via a network, whereby the control device (80) is unambiguously identified by the central unit by means of an identification module, and
the control device (80) of the base station (10) is controlled by the central unit via the assigned base station controller via the transceiver modules (60/61).

12. Method in accordance with claim 11, **characterized in that** the facility (11) is switched on and off by means of the control device (80).

13. Method in accordance with one of claims 11 to 12, **characterized in that**, for the purpose of transmission, the transceiver modules (60/61) use a transmit signal, a receive signal and a separate control signal.

14. Method in accordance with one of claims 11 to 13, **characterized in that** street-lighting devices (12) of the road network (50) are used as public facilities (11) for the installation of the at least one base station (10).

15. Method in accordance with one of claims 11 to 14, **characterized in that** power supply networks for public transport are used as public facilities (11) for the installation of the at least one base station (10).

16. Method in accordance with one of claims 11 to 15, **characterized in that** the base station controller and the base stations (10) connected to it each include a control processor with modem (63), by means of which the radio-frequency signals can be transmitted by two transfer signals and a control signal in a separate frequency range.

17. Method in accordance with one of claims 11 to 16, **characterized in that** frequency shift keying is used in the transceiver modules (60/61) as the frequency-modulation technique for the transmission.

18. Method in accordance with one of claims 11 to 17, **characterized in that** frequency division multiple access and/or time division multiple access, code division multiple access and/or orthogonal frequency division multiplexing is used in the transceiver modules (60/61) as the frequency-modulation technique for the transmission.

19. Method in accordance with one of claims 11 to 18, **characterized in that** a transmission frequency band between 100 MHz and 500 MHz is used in the transceiver modules (60/61) for transmitting the radio-frequency signals via the power supply system (20/21).

20. Method in accordance with one of claims 11 to 19, **characterized in that** at least one of the base stations (10) covers two different receive/transmit cells with differing cell group identities.

## Revendications

1. Réseau mobile cellulaire, au moins une station de base (10) étant montée respectivement dans un dispositif (11) alimenté par un réseau électrique (20/21) et étant reliée à un contrôleur de station de base associé, au moins une station de base (10) comprenant des moyens pour l'échange de signaux radiofréquence avec des appareils radio mobiles et au moins une station de base (10) étant couplée par un premier module transcepteur (60) au réseau électrique (20/21), un second module transcepteur (61) étant accouplé à une autre endroit également au réseau électrique (20, 21), la transmission des signaux électriques correspondants aux signaux radiofréquences étant possible entre les modules transcepteurs (60/61) de manière bidirectionnelle au moyen des modules transcepteurs (60/61) par le réseau électrique (20/21), et le second module transcepteur (61) étant relié au contrôleur de station de base associé au moins à une station de base (10), de sorte que la communication entre au moins une station de base (10) et le contrôleur de station de base qui lui est associé est possible entre eux par le réseau électrique (20/21), **caractérisé en ce que**
la station de base (10) comprend un dispositif de contrôle (80) pour la commande du dispositif (11), le dispositif de contrôle (80) étant relié directement et/ou par le réseau électrique (20/21) au dispositif (11),
le dispositif de contrôle (80) comporte un module d'identification (81) et des moyens pour la communication avec une unité centrale, le dispositif de contrôle (80) étant identifiable par l'unité centrale au moyen du module d'identification (81), et
le dispositif de contrôle (80) de la station de base (10) est commandable par l'unité centrale par le biais du contrôleur de station de base associé et les modules transcepteurs (60/61).

2. Réseau mobile cellulaire selon la revendication 1, **caractérisé en ce que** le dispositif de contrôle (80) comprend au moins des moyens pour la mise en marche et l'arrêt du dispositif (11).

3. Réseau mobile cellulaire selon l'une des revendications 1 à 2, **caractérisé en ce que** les modules transcepteurs (60/61) sont destinés à la transmission d'un signal d'émission, un signal de réception ainsi qu'un signal de contrôle séparé.

4. Réseau mobile cellulaire selon la revendication 1 à 3, **caractérisé en ce que** les dits dispositifs (11) sont des dispositifs d'éclairage public (12) du réseau routier (50).

5. 4. Réseau mobile cellulaire selon la revendication 1 à 3, **caractérisé en ce que** les dits dispositifs (11) sont des réseaux d'alimentation électrique de moyens de transport public.

6. Réseau mobile cellulaire selon l'une des revendications 1 à 5, **caractérisé en ce que** les modules transcepteurs (60/61) comprennent respectivement un processeur de contrôle avec un modem (63), lequel processeur de contrôle est accouplé à un triplexeur de fréquence /filtre triplexeur, au moyen desquels les signaux radiofréquences sont transmissibles par deux signaux de transmission et un signal de contrôle dans une plage de fréquences séparée.

7. Réseau mobile cellulaire selon l'une des revendications 1 à 6, **caractérisé en ce que** les modules transcepteurs (60/61) utilisent la modulation par déplacement de fréquence (Frequency Shift Keying) en tant que technique de modulations de fréquence pour la transmission.

8. Réseau mobile cellulaire selon l'une des revendications 1 à 7, **caractérisé en ce que** les modules transcepteurs (60/61) utilisent pour la transmission en tant que techniques de modulation de fréquence le multiplexage Division Multiple Access (division à accès multiple) et/ou le Time division multiple access (division à accès multiple temporelle), le code division multiple access (division à accès multiple par code)et/ou l'orthogonal frequency division (répartition en fréquences orthogonales).

9. Réseau mobile cellulaire selon l'une des revendications 1 à 7, **caractérisé en ce que** les modules transcepteurs (60/61) utilisent une bande de fréquence de transmission comprise entre 100 MHz et 500 MHz pour la transmission des signaux radiofréquence par le réseau électrique (20/21).

10. Réseau mobile cellulaire selon l'une des revendications 1 à 9, **caractérisé en ce qu'**il est possible de couvrir avec au moins l'une des stations de base (10) deux ou plusieurs cellules émettrices/réceptrices différentes avec des identités de groupes cellulaires différentes.

11. Procédé pour l'établissement d'une station de base (10) d'un réseau mobile cellulaire et pour la connexion de la station d e base (10) au réseau mobile cellulaire, au moins une station de base (10) étant montée respectivement dans un dispositif (11) alimenté par un réseau électrique (20/21) et étant reliée à un contrôleur de station de base associé, au moins une station de base (10) comprenant des moyens pour l'échange de signaux radiofréquence avec des appareils radio mobiles et au moins une station mobile (10) étant couplée par un premier module transcepteur (60) au réseau électrique (20/21), un second module transcepteur (61) étant accouplé à un autre endroit également au réseau électrique (20, 21), la transmission des signaux électriques correspondant aux signaux radiofréquences étant possible entre les modules transcepteurs (60/61) de manière bidirectionnelle au moyen des modules transcepteurs (60/61) par le réseau électrique (20/21), et le second module transcepteur (61) étant relié au contrôleur de station de base associé au moins à une station de base (10), de sorte que la communication entre au moins une station de base (10) et le contrôleur de station de base associé étant possible entre eux par le réseau électrique (20/21), **caractérisé**
**en ce qu'**un dispositif de contrôle (80) de la station de base (10) est placé en amont du dispositif (11) dans le réseau électrique (20/21), le dispositif (11) étant commandé au moyen du dispositif de contrôle (810),
**en ce que** l'unité centrale communique par un réseau avec le dispositif de contrôle (81), le dispositif de contrôle (80) est identifié par l'unité centrale de manière univoque au moyen d'un module d'identification et
**en ce que** le dispositif de contrôle (80) de la station de base 810) est commandé par l'unité centrale via le contrôleur de station de base associé par les modules transcepteurs (60/61).

12. Procédé selon la revendication 11, **caractérisé en ce que** le dispositif (11) est mis en route et arrêté au moyen du dispositif de contrôle (80).

13. Procédé selon l'une des revendications 11 à 12, **caractérisé en ce que** les modules transcepteurs (60/61) utilisent pour la transmission un signal d'émission, un signal de réception ainsi qu'un signal de contrôle séparé.

14. Procédé selon l'une des revendications 11 à 13, **caractérisé en ce qu'**en tant que dispositifs publics (11), il est utilisé des dispositifs d'éclairage public (12) du réseau routier (50) pour le montage d'au moins une station de base (10).

15. Procédé selon l'une des revendications 11 à 14, **caractérisé en ce qu'**en tant que dispositifs publics (11), il est utilisé des réseaux d'alimentation électriques de moyens de transport public (12) pour le montage d'au moins une station de base (10).

16. Procédé selon l'une des revendications 11 à 15, **caractérisé en ce que** le contrôleur de station de base et les stations de base (10) reliées à ce dernier comprennent respectivement un processeur de contrôle avec modem (63) au moyen duquel les signaux radiofréquence sont transmissibles par deux signaux de transmission et un signal de contrôle dans une plage de fréquences séparée.

17. Procédé selon l'une des revendications 11 à 16, **caractérisé en ce que** pour les modules transcepteurs (60/61), la modulation par déplacement de fréquence (Frequency Shift Keying) est utilisée pour la transmission en tant que technique de modulation de fréquence.

18. Procédé selon l'une des revendications 11 à 17, **caractérisé en ce que** pour les modules transcepteurs (60/61), il est utilisé utilisent en tant que techniques de modulation de fréquence pour la transmission, le multiplexage Division Multiple Access (division à accès multiple) et/ou le Time division multiple access (division à accès multiple temporelle), le code division multiple access (division à accès multiple par code)et/ou l'orthogonal frequency division (répartition en fréquences orthogonales).

19. Procédé selon l'une des revendications 11 à 18, **caractérisé en ce que** pour les modules transcepteurs (60/61), une bande de fréquence de transmission comprise entre 100 MHz et 500 MHz est utilisée pour la transmission des signaux de radiofréquence par le réseau électrique (20/21).

20. Procédé selon l'une des revendications 11 à 19, **caractérisé en ce qu'**au moins l'une des stations de base (10) couvre deux ou plusieurs cellules émettrices/réceptrices différents avec des identités de groupes cellulaires différentes.
